# EUROPÄISCHE PATENTSCHRIFT

(11) **EP 3 887 789 B1**
(45) Veröffentlichungstag und Bekanntmachung des Hinweises auf die Patenterteilung: **01.11.2023**
(21) Anmeldenummer: 19812992.6
(22) Anmeldetag: 29.11.2019
(51) Int. Cl.: G01M 3/36

(54) **LECKDETEKTION**
LEAK DETECTION
DÉTECTION DE FUITE

(30) Priorität: 29.11.2018 DE 102018130325
(43) Veröffentlichungstag der Anmeldung: 06.10.2021
(73) Patentinhaber: Heuft Systemtechnik GmbH, 56659 Burgbrohl (DE)
(72) Erfinder: HEUFT, Bernhard, 56659 Burgbrohl (DE); KURZ, Jürgen, 56626 Andernach (DE)
(74) Vertreter: Gritschneder, Sebastian
(86) Internationale Anmeldenummer: PCT/EP2019/083089
(87) Internationale Veröffentlichungsnummer: WO 2020/109552

(56) Entgegenhaltungen:
- EP-A1- 0 892 918
- WO-A1-02/073151
- US-A- 4 706 494
- US-B1- 6 167 751

## Beschreibung

Die Erfindung betrifft eine Vorrichtung und ein Verfahren zur Leckdetektion bei verschlossenen Behältern mit einer Inspektionseinrichtung, die dazu konfiguriert ist, die Wölbung des Behälterverschlusses der verschlossenen Behälter zu bestimmen.

In der Lebensmittel-, Getränke- und Pharmaindustrie gibt es verschiedene Verfahren, um die Dichtigkeit von verschlossenen Behältern zu überprüfen. Typischerweise verwendete Behälterverschlüsse aus Weißblech können hierbei zum Beispiel mittels elektro-magnetischen oder akustischen Verfahren zum Schwingen angeregt werden. Aus dem Schwingungsverhalten der Verschlüsse kann dann eine Aussage über den korrekten Sitz und die Dichtigkeit des Behälterverschlusses getroffen werden.

Die US 6 167 751 B1 betrifft eine Leckdetektion bei Behältern deren Behälterverschluss von einer flexiblen Membran gebildet wird. Bei der Leckdetektion wird der Innendruck im Behälter bezüglich des Umgebungsdrucks verändert. Durch den Wechsel der Druckverhältnisse wechselt die flexible Membran zwischen konvexer und konkaver Form. Dieser Wechsel wird durch einen Sensor aufgezeichnet und anschließend ausgewertet.

Die WO 02/073151 A1 befasst sich ebenfalls mit der Leckdetektion von verschlossenen Behältern. Dabei wird eine Platte auf den Behälterdeckel gedrückt und die so erzeugte Bewegung des Deckels mittels eines Messmagneten aufgezeichnet. Die Messung der Bewegung des Deckels geschieht dabei gleichzeitig mit der Druckausübung.

Die US 4 706 494 A betrifft eine Vorrichtung zur Leckdetektion von Behältern, bei der ein Aktuator einen Stempel gegen einen flexiblen Behälterverschluss anstellt. Die Bewegung des Stempels bzw. der ausgeübte Druck wird im zeitlichen Verlauf gemessen. Im Vergleich mit einer Sollkurve wird auf die Dichtigkeit des Behälters geschlossen. Druckausübung und Inspektion erfolgen damit zeitgleich.

Bei kohlensäurehaltigen Getränken entwickelt sich in korrekt verschlossenen Behältern außerdem ein Überdruck. Dieser Überdruck hat zur Folge, dass sich elastische Behälterverschlüsse, wie zum Beispiel Kronkorken, leicht nach außen wölben. Diese charakteristische Wölbung kann auf optischem Wege mittels 2D oder 3D Laser Technologie ermittelt werden. Ist keine Wölbung zu detektieren, kann dies auf eine Undichtigkeit des Behälters zurückzuführen sein.

In letzter Zeit werden kohlensäurehaltige Getränke vermehrt mit sogenannten Pullring-Verschlüssen ausgestattet. Diese Pullring-Verschlüsse sind üblicherweise aus Leichtmetall wie Aluminium hergestellt und können vom Endverbraucher von Hand ohne Zuhilfenahme von Öffnungshilfsmittel geöffnet werden. Aufgrund der Tatsache, dass Aluminium nicht magnetisch ist und deutlich weicher ist als herkömmlicherweise verwendetes Material für Behälterverschlüsse, können die oben diskutierten akustischen und elektromagnetischen Lecktest-Verfahren nicht eingesetzt werden. Die Bestimmung der Verschlusswölbung ist daher derzeit die vielversprechendste Methode, um die Dichtigkeit derartiger Behälter zu überprüfen.

Ein Nachteil dieser Aluminium-Verschlüsse besteht nun darin, dass eine einmal entstandene Wölbung des Verschlusses sich nicht von alleine zurückbildet, wenn der Behälterinnendruck abfällt. Diese Situation kann insbesondere dann auftreten, wenn ein Behälterverschluss ein recht kleines Leck aufweist oder wenn das Leck erst im Laufe des Abfüllprozesses aufgetreten ist. Wird also bei derartigen Aluminium-Verschlüssen eine Wölbung detektiert, bedeutet dies zwar, dass ein gewisser Behälterinnendruck nach dem Verschließen vorhanden war. Es lässt sich aber nicht mit Sicherheit eine Aussage darüber treffen, ob zum Inspektionszeitpunkt ebenfalls noch ein ausreichender Behälterinnendruck vorhanden war.

Der vorliegenden Erfindung liegt daher die Aufgabe zugrunde, eine Vorrichtung und ein Verfahren bereitzustellen, bei der ein Lecktest bei Leichtmetall-Behälterverschlüssen zuverlässiger durchgeführt werden kann. Eine weitere Aufgabe der Erfindung liegt darin, eine Vorrichtung und ein Verfahren bereitzustellen, bei der ein Lecktest kontinuierlich durchgeführt werden kann, also ohne dabei den kontinuierlichen Transport der Behälter im Produktions- bzw. Abfüllprozess zu unterbrechen.

Erfindungsgemäß wird daher eine Vorrichtung mit den Merkmalen gemäß Anspruch 1 vorgeschlagen. Die Vorrichtung zur Leckdetektion von verschlossenen Behältern, umfasst eine Inspektionseinrichtung, die dazu konfiguriert ist, die Wölbung des Behälterverschlusses der verschlossenen Behälter zu bestimmen und eine Auswerteinrichtung, mit der die Wölbung des Verschlusses mit einem Vorgabewert verglichen wird. Die Vorrichtung umfasst weiter eine Druckerzeugungseinrichtung, mit der jeder Behälterverschluss vor der Inspektion flach gedrückt wird. Die Druckerzeugungseinrichtung umfasst dabei einen Aktuator, mit dem lokal von außen ein Druck auf jeden Behälterverschluss ausgeübt wird.

Bei korrekt verschlossenen Behältern wird sich aufgrund des Behälterinnendrucks nach dem Flachdrücken wieder die charakteristische Wölbung ausbilden. Bei undichten Behältern ist dagegen kein erhöhter oder nur ein geringerer Innendruck vorhanden, und es wird sich daher keine oder nur eine geringere Wölbung ausbilden.

Die Vorrichtung und das Verfahren der vorliegenden Erfindung eignen sich insbesondere zur Leckdetektion bei verschlossenen Getränkebehältern. Die Getränkebehälter können dabei jegliche üblicherweise verwendete Getränkebehälter aus Glas, Kunststoff, PET oder anderen geeigneten Materialien sein. Diese Getränkebehälter haben üblicherweise eine im Wesentlichen zylindrische Form und weisen an ihrer Oberseite eine verschließbare, kreisförmige Mündungsöffnung auf.

Die Mündungsöffnung der Getränkebehälter kann dabei insbesondere mit einem metallischen Verschluss versehen sein. Die vorliegende Erfindung ist insbesondere dazu geeignet, eine Leckdetektion bei Getränkebehältern durchzuführen, bei denen die Behälterverschlüsse aus Leichtmetall wie Aluminium oder Leichtmetalllegierungen hergestellt sind.

Die Wölbung der Behälterverschlüsse wird vorteilhafterweise mittels einer optischen Inspektionseinrichtung bestimmt. Geeignete optische Inspektionseinrichtungen sind Punktabstandsscanner oder 2D/3D Laser Scanner.

Hierbei ist es nicht notwendig, den kompletten Verlauf der Wölbung des Behälterverschlusses exakt zu bestimmen. Ein Punktabstandsscanner ermittelt zum Beispiel lediglich den höchsten und den niedrigsten Punkt der Oberseite eines Verschlusses. Aufgrund der Symmetrie der Behälterverschlüsse befindet sich bei intakten Verschlüssen der höchste Punkt in der Mitte des Verschlusses. Die Höhendifferenz zwischen dem höchsten und dem niedrigsten Punkt auf der Oberseite des Verschlusses ist dann ein Maß für die Höhe des Behälterinnendrucks.

Eine höhere Präzision ist mit kommerziell erhältlichen 2D oder 3D Laser Scannern erzielbar. Hierbei wird entweder ein Linienprofil durch den Mittelpunkt eines Behälterverschlusses bestimmt (2D Laser Scanner) oder es wird ein vollständiges Höhenprofil eines Behälterverschlusses erstellt (3D Laser Scanner). Aus diesen Daten kann dann der Behälterinnendruck noch genauer bestimmt werden.

Erfindungsgemäß wird vor der optischen Inspektion der Behälterverschluss mittels einer Druckerzeugungseinrichtung flach gedrückt. Der Ausdruck "flach gedrückt" bedeutet dabei, dass der Behälterverschluss so angedrückt wird, dass er sich im Wesentlichen parallel zu der durch die Mündungsöffnung des Behälters definierte Ebene erstreckt.

Erfindungsgemäß ist die Druckerzeugungseinrichtung vor der Inspektionseinrichtung angeordnet.

Die Druckerzeugungseinrichtung ist vorteilhafterweise unmittelbar vor der Inspektionseinrichtung angeordnet. Die Druckerzeugungseinrichtung kann dabei eine Vorrichtung sein, die ausschließlich dem Zweck dient, die Behälterverschlüsse der zu überprüfenden Behälter flach zu drücken. Dies kann durch eine beliebige Druckerzeugungseinrichtung, die einen Aktuator umfasst, mit dem lokal von außen ein Druck auf jeden Behälterverschluss ausgeübt wird, erreicht werden. Der Aktuator ist so ausgebildet, dass dieser gegen die Oberseite eines Verschlusses angestellt werden kann. Hierzu können zum Beispiel rein mechanische Druckerzeugungseinrichtungen, aber auch mechanische Druckerzeugungseinrichtungen mit hydraulischen, pneumatischen oder fluidmechanischen Elementen eingesetzt werden. Der Aktuator kann zum Beispiel auch ein Strahl eines Fluids sein, der auf die Behälterverschlüsse gerichtet wird, um damit lokal von außen ein Druck auf jeden Behälterverschluss auszuüben. Geeignete Fluide hierfür können zum Beispiel Luft oder Wasser sein.

Druckerzeugungseinrichtungen gemäß der vorliegenden Erfindung sind solche Einrichtungen, die dazu geeignet sind, auf die Oberseite eines Verschlusses einen positiven Druck zu erzeugen, der den Behälterinnendruck kompensiert, sodass der Behälterverschluss sich parallel zu der durch die Mündungsöffnung des Behälters definierte Ebene erstreckt.

Grundsätzlich kommt es nicht darauf an, dass der Behälterverschluss vollkommen flach gedrückt wird und dieser sich im Moment des Flachdrückens exakt in der durch die Mündungsöffnung des Behälters definierte Ebene erstreckt. Zur Bestimmung, ob der Behälterinnendruck ausreichend hoch ist, so dass man auf einen korrekt verschlossenen Behälter schließen kann, ist es ausreichend, wenn auf den Behälterverschluss ein signifikanter Druck ausgewirkt wird. Dieser Druck kann in etwa dem erwarteten Behälterinnendruck entsprechen. In vielen Fällen kann es aber auch ausreichend sein, wenn der auf den Verschluss ausgeübte Druck um bis zu +/- 30% oder um bis zu +/- 50% vom erwarteten Behälterinnendruck abweicht.

In einer Ausführungsform kann die Druckerzeugungseinrichtung als Aktuator einen Stempel umfassen, der gegen die Oberseite eines jeden Behälterverschlusses angestellt wird. Der Stempel hat vorzugsweise einen Durchmesser, der gleich groß oder größer ist als der Außendurchmesser des Behälters im Bereich der Mündungsöffnung. Die Größe der Kontaktfläche des Stempels stellt dabei sicher, dass der Behälterverschluss maximal soweit eingedrückt werden kann, dass sich der Behälterverschluss vollkommen flach, also parallel zu der durch die Mündungsöffnung des Behälters definierte Ebene erstreckt.

In modernen Abfüllanlagen der Getränkeindustrie werden die Behälter mit Flaschengeschwindigkeiten von bis zu mehreren 10000 Behältern pro Stunde transportiert. Die Druckbeaufschlagung kann bei der Druckerzeugungseinrichtung gemäß der vorliegenden Erfindung während einer sehr kurzen Zeitspanne erfolgen. Daher können die Behälterverschlüsse während des Transports mit Druck beaufschlagt werden.

Die Druckerzeugungseinrichtung kann auch in einer anderen Behälterbehandlungseinrichtung integriert sein. Vorteilhafterweise kann die Druckerzeugungseinrichtung zum Beispiel in Behälterbehandlungseinrichtungen vorgesehen sein, in denen die zu untersuchenden Behälter an ihrem Mündungsbereich gehalten werden. Die Halteeinrichtung kann dabei so ausgeführt sein, dass diese gleichzeitig dazu dient, den Behälterverschluss flach anzudrücken.

Eine geeignete Behälterbehandlungseinrichtung, bei der Behälter zwischen ihrem Mündungsbereich und einem Bodenbereich eingeklemmt gehalten werden, ist zum Beispiel ein Etikettierer. In Etikettierern werden Behälter zwischen einer sogenannten Behältertulpe und einem Bodenbereich eingeklemmt, wodurch der Seitenwandbereich dann im Wesentlichen frei zugänglich ist, sodass dieser mit einem Behälteretikett versehen werden kann. Die Behältertulpen bilden dabei eine hohlzylinderförmige Aufnahme für den Verschlussbereich der Behälter. Diese Behältertulpen können dabei so modifiziert werden, dass sie nicht nur den Behälter sicher aufnehmen, sondern dabei auch gleichzeitig einen Druck auf den Behälterverschluss ausüben und diesen zum Beispiel flach an die Mündungsöffnung des Behälters andrücken. Die Druckerzeugungseinrichtung kann zum Beispiel als ein Insert in der Behältertulpe ausgeführt sein, das dafür sorgt, dass der Behälterverschluss während des Etikettierens flach gedrückt wird.

Die vorliegende Erfindung betrifft auch ein Verfahren zur Leckdetektion von verschlossenen Behältern, mit Merkmalen gemäß Anspruch 7. Bei dem erfindungsgemäßen Verfahren wird ein Behälterverschluss durch Ausüben eines Drucks flach gedrückt. Die Druckerzeugungseinrichtung umfasst dabei einen Aktuator, mit dem lokal von außen ein Druck auf jeden Behälterverschluss ausgeübt wird. Anschließend wird der Behälter zur Inspektion des Behälterverschlusses einer Inspektionseinrichtung zugeführt, in der die Wölbung des Behälterverschlusses bestimmt wird. Die Wölbung des Behälterverschlusses wird dann mit einem Vorgabewert verglichen. Ist die Wölbung geringer als ein vorbestimmter Schwellenwert, so wird dies als Indiz dafür gewertet, dass der Behälter oder der Behälterverschluss undicht ist. Ein solcher Behälter wird dann aus dem Abfüllprozess ausgesondert.

Das erfindungsgemäße Verfahren eignet sich insbesondere zur Leckdetektion von verschlossenen Behältern, die mittels Behälterverschlüssen aus Leichtmetall oder Leichtmetalllegierungen hergestellt sind. Insbesondere eignet sich das Verfahren zur Kontrolle von sogenannten Pullring -Verschlüssen aus Aluminium.

Aufgrund ihrer Materialeigenschaften können Verschlüsse aus Aluminium oder Aluminiumlegierungen nicht mit elektromagnetischen oder akustischen Methoden untersucht werden. Die Bestimmung der Verschlusswölbung ist zwar grundsätzlich bei Aluminiumverschlüssen anwendbar, allerdings ist die Elastizität von Aluminium sehr gering, sodass einmal ausgewölbte Verschlüsse sich nicht von alleine wieder flach an die Behälteröffnung anlegen, wenn der Behälterinnendruck nachlässt. Aus diesem Grund ist auch bei Behältern, die relativ kleine Leckagen aufweisen oder die erst im Abfüllprozess nach dem Verschließen undicht geworden sind, eine ausgeprägte Verschlusswölbung vorhanden. Solche Behälter würden herkömmlicherweise als intakt gewertet werden. Mit der vorliegenden Erfindung ist es möglich, auch solche undichten Behälter zu erkennen und aus dem Abfüllprozess auszusondern.

Im Folgenden wird die vorliegende Erfindung durch die beiliegenden Zeichnungen näher beschrieben. Hierbei zeigt:
- Fig. 1: ein schematischer Ausschnitt einer Abfülllinie,
- Fig. 2: einen Pullring-Verschluss gemäß Stand der Technik,
- Fig. 3: eine mit einem Pullring-Verschluss verschlossene Behältermündung und
- Fig. 4: eine Behältertulpe eines Etikettierers mit und ohne Modifikation.

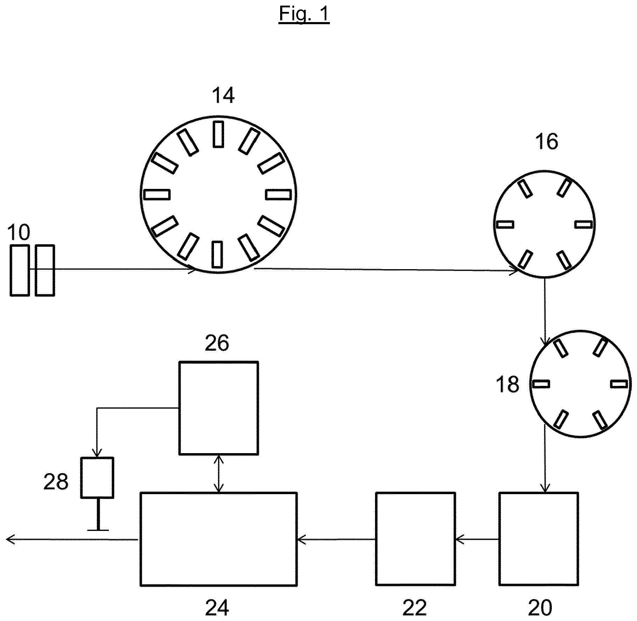

In Fig. 1 ist schematisch ein Ausschnitt einer Abfülllinie abgebildet, in der Behälter 10 mit einem kohlensäurehaltigen Produkt befüllt und anschließend mit einem Pullring-Verschluss 12 versehen werden. Die gereinigten, leeren Behälter 10 werden hierzu zunächst zu einem Füller 14 transportiert. Die mit dem gewünschten Produkt befüllten Behälter 10 werden dann in einem Verschließer 16 luftdicht mittels eines Pullring-Verschlusses 12 verschlossen. Schließlich werden die Behälter 10 noch in einem Etikettierer 18 mit einer Etikettierung zur Identifizierung des Behälterinhalts versehen.

Abschließend werden die Behälter 10 einer umfassenden Endkontrolle unterzogen, bei der in mehreren Inspektionseinrichtungen 20, 22, 24 verschiedene Eigenschaften des befüllten, verschlossenen Behälters 10 untersucht werden. In einer Kontrolleinrichtung 26 werden die Ergebnisse der Behälterinspektion evaluiert. Nur solche Behälter 10, die den geforderten Qualitätskriterien entsprechen, werden in den Umlauf gebracht. Behälter 10, die einen Fehler aufweisen, werden dagegen mittels einer Ausleiteinrichtung 28 aus dem Abfüllprozess ausgesondert und entsorgt.

Eines der Qualitätskriterien, die in der Endkontrolle vorgenommen werden, ist die Prüfung der Dichtigkeit der Behälter 10. Je nach Behältertyp und Verschlusstyp sind dem Fachmann verschiedene Methoden zur Leckdetektion geläufig. Etwas eingeschränkt sind die Möglichkeiten zur Leckdetektion bei der Verwendung von Pullring-Verschlüssen 12 aus Aluminium. Da Aluminium nicht magnetisch und relativ weich ist, können herkömmliche Leckdetektionsmethoden, die mit akustischer oder elektromagnetischer Anregung der Behälterverschlüsse arbeiten, nicht eingesetzt werden. Zur Leckdetektion bei Getränkebehältern 10, in denen kohlensäurehaltige Produkte mit Pullring-Verschlüssen 12 verschlossen werden, wird daher in der Inspektionseinrichtung 24 die Wölbung der Pullring-Verschlüsse 12 untersucht. Bei luftdicht verschlossenen Behältern 10 entwickelt sich ein Überdruck, der zu einer Auswölbung des Pullring-Verschlusses 12 führt.

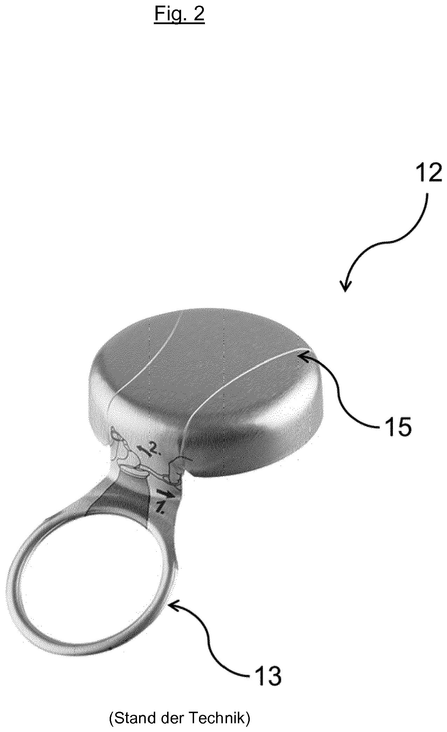

Ein typischerweise verwendeter Pullring-Verschluss 12 gemäß dem Stand der Technik ist in Figur 2 abgebildet. Der Pullring-Verschluss 12 weist eine seitliche Lasche oder Pullring 13 auf, an dem der Benutzer zum Öffnen des Verschlusses anziehen kann. Um das Öffnen zu erleichtern, ist der Pullring-Verschluss 12 aus Aluminium hergestellt. Zusätzlich kann der Pullring-Verschluss 12 auch noch mit Stanzlinien 15 versehen sein, wodurch das Öffnen noch weiter erleichtert wird.

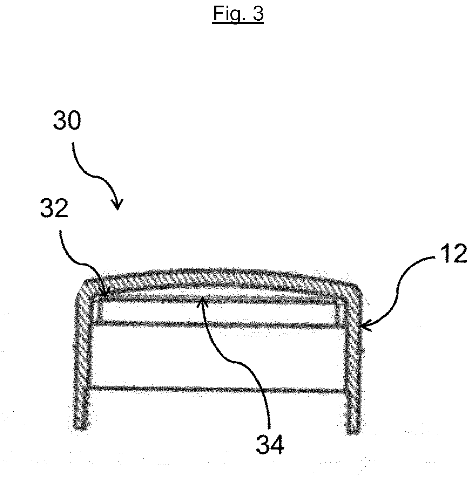

In Figur 3 ist ein Querschnitt durch einen verschlossenen Behälterkopf mit Pullring-Verschluss 12 abgebildet. Der Pullring-Verschluss 12 liegt im Mündungsbereich 30 des Behälters 10 über den gesamten Umfang der Mündung stirnseitig an der Behälterwand 32 an und bedeckt dabei die gesamte Behälteröffnung 34. Aufgrund des Behälterinnendrucks erstreckt sich der Pullring-Verschluss 12 jedoch nicht in der durch die Behälteröffnung 34 definierte Ebene, sondern der Pullring-Verschluss 12 wird nach außen gedrückt und ist daher leicht gewölbt.

Das weiche Material aus dem die Pullring-Verschlüsse 12 hergestellt sind, ermöglicht es auf der einen Seite dem Benutzer die Verschlüsse leichter zu öffnen. Auf der anderen Seite führt die mangelnde Elastizität der Pullring-Verschlüsse 12 dazu, dass eine aufgrund des Behälterinnendrucks entstandene Wölbung eines Pullring-Verschlusses 12 sich nicht von alleine wieder zurück bildet, wenn der Behälterinnendruck aufgrund eines kleinen Lecks im Verlauf des Abfüllverfahrens abnimmt.

Aus diesem Grund wird in der Inspektionseinrichtung 24 auf den Pullring-Verschluss 12 vor der Leckdetektion kurzzeitig ein Druck ausgeübt, mit dem der Pullring-Verschluss 12 flach gedrückt wird. Diese Druckausübung erfolgt in der in Fig. 1 dargestellten Abfülllinie im Etikettierer 18. Im Etikettierer 18 werden die einzelnen Behälter jeweils zwischen ihrem Boden- und Mündungsbereich eingeklemmt gehalten, so dass die Seitenwand der Behälter frei zugänglich ist und mit der gewünschten Etikettierung versehen werden kann. Im Mündungsbereich werden die Behälter dabei in einer Behältertulpe 40 gehalten.

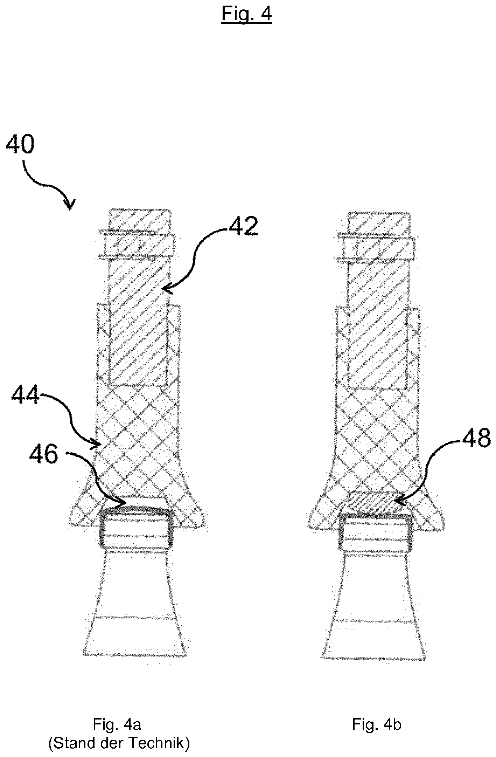

In Fig. 4a ist eine solche Behältertulpe 40 abgebildet. Sie umfasst eine Basis 42 und einen Behälteradapter 44 an dessen Unterseite eine hohlzylinderförmige Aufnahme 46 für den Mündungsbereich der Behälter 10 vorgesehen ist. Wie in Fig. 4a zu erkennen ist, kontaktiert die Behältertulpe 40 nur die stirnseitige Behälterwand im Mündungsbereich des Behälters. Der Pullring-Verschluss 12 behält daher seine Wölbung bei.

In Fig. 4b ist eine modifizierte Behältertulpe 40 abgebildet, wobei die Modifikation darin besteht, dass ein Insert 48 vorgesehen ist, welches in der hohlzylinderförmigen Aufnahme 46 angebracht ist. Wenn nun ein Behälter 10 in der modifizierten Behältertulpe 40 aufgenommen und eingeklemmt wird, sorgt das Insert 48 dafür, dass zusätzlich auch ein Druck auf den gewölbten Pullring-Verschluss 12 ausgeübt wird, sodass dieser flach gedrückt wird, solange der Behälter in der modifizierten Behältertulpe 40 aufgenommen ist.

Nach dem Etikettierer 18 werden die Behälter zu den mehreren Inspektionseinrichtungen 20, 22 und insbesondere zur optischen Inspektionseinrichtung zur Überprüfung der Behälterwölbung gefördert.

Bei Behältern 10, die ein Leck aufweisen, ist der Differenzdruck zwischen dem Behälterinneren und der Umgebung nicht vorhanden oder reduziert, so dass sich der im Etikettierer 18 flach gedrückte Pullring-Verschluss 12, anschließend gar nicht mehr oder nur sehr geringfügig auswölbt. Diese fehlende oder zu geringe Auswölbung wird dann in der optischen Inspektionseinrichtung 24 erkannt und der Behälter 10 kann dann aus dem Abfüllprozess ausgesondert werden.

Ist der Behälter 10 dagegen luftdicht verschlossen so, sorgt der ausreichend hohe Behälterinnendruck dafür, dass der flach gedrückte Pullring-Verschluss 12 nach Verlassen des Etikettierers 18 wieder die vorherige Auswölbung annimmt. Ein Behälter 10, der einen Pullring-Verschluss 12 mit einer ausreichenden Auswölbung aufweist, wird als luftdicht eingestuft und kann in den Verkauf freigegeben werden.

### Bezugszeichenliste

| | | | |
|---|---|---|---|
| 10 | Behälter | 28 | Ausleiteinrichtung |
| 12 | Pullring-Verschluss | 30 | Mündungsbereich |
| 13 | Pullring | 32 | Behälterwand |
| 14 | Füller | 34 | Behälteröffnung |
| 15 | Stanzlinie | 40 | Behältertulpe |
| 16 | Verschließer | 42 | Basis |
| 18 | Etikettierer | 44 | Behälteradapter |
| 20 | Inspektionseinrichtung | 46 | hohlzylinderförmige Aufnahme |
| 22 | Inspektionseinrichtung | 48 | Insert |
| 24 | optische Inspektionseinrichtung | | |
| 26 | Kontrolleinrichtung | | |

## Patentansprüche

1. Vorrichtung zur Leckdetektion von verschlossenen Behältern (10), umfassend:
- eine Transportvorrichtung für den Transport der Behälter (10),
- eine Inspektionseinrichtung (24), die dazu konfiguriert ist, die Wölbung des Behälterverschlusses (12) der verschlossenen Behälter (10) zu bestimmen, sowie
- eine Druckerzeugungseinrichtung, mit der jeder Behälterverschluss (12) vor der Inspektion flach gedrückt wird, und
- eine Auswerteinrichtung (26), mit der die Wölbung des Verschlusses (12) mit einem Vorgabewert verglichen wird,
wobei die Druckerzeugungseinrichtung einen Aktuator umfasst, mit dem lokal von au-ßen ein Druck auf jeden Behälterverschluss (12) ausgeübt wird,
**dadurch gekennzeichnet, dass**
die Druckerzeugungseinrichtung vor der Inspektionseinrichtung (24) angeordnet ist.

2. Vorrichtung zur Leckdetektion gemäß Anspruch 1, wobei die Inspektionseinrichtung (24) zur Bestimmung der Wölbung des Behälterverschlusses (12) eine optische Inspektionseinrichtung ist.

3. Vorrichtung zur Leckdetektion gemäß Anspruch 2, wobei die optische Inspektionseinrichtung zur Bestimmung der Wölbung des Behälterverschlusses (12) ein Punktabstandsscanner oder ein 2D oder 3D Laser Scanner ist, und wobei zur Bestimmung der Wölbung des Behälterverschlusses (12) der Abstand zwischen dem höchsten Punkt des Behälterverschlusses (12) und einem Randpunkt des Behälterverschlusses (12) bestimmt wird.

4. Vorrichtung zur Leckdetektion gemäß einem der vorhergehenden Ansprüche, wobei die Druckerzeugungseinrichtung einen Stempel umfasst, mit dem der Druck auf jeden Behälterverschluss (12) ausgeübt wird.

5. Vorrichtung zur Leckdetektion gemäß einem der vorhergehenden Ansprüche, wobei vor der Inspektionseinrichtung (24) mindestens eine weitere Behälterbehandlungseinrichtung angeordnet ist, und wobei die Druckerzeugungseinrichtung in dieser weiteren Behälterbehandlungseinrichtung integriert ist.

6. Vorrichtung zur Leckdetektion gemäß einem der vorhergehenden Ansprüche, wobei vor der Inspektionseinrichtung (24) ein Etikettierer (18) mit einer Behältertulpe (40) vorgesehen ist, und wobei die Druckerzeugungseinrichtung als Insert (48) in der Behältertulpe (40) ausgeführt ist.

7. Verfahren zur Leckdetektion von verschlossenen Behältern (10), umfassend die Schritte:
- Ausüben eines Drucks mittels einer Druckerzeugungseinrichtung auf einen Behälterverschluss (12), um diesen Behälterverschluss (12) flach zu drücken,
- Transportieren des Behälters (10) zu einer Inspektionsvorrichtung (24),
- Inspizieren des Behälterverschlusses (12) zur Bestimmung der Wölbung des Behälterverschlusses (12) des verschlossenen Behälters (10) sowie
- Vergleichen der derart bestimmten Wölbung des Behälterverschlusses (12) mit einem Vorgabewert,
wobei die Druckerzeugungseinrichtung einen Aktuator umfasst, mit dem lokal von au-ßen ein Druck auf jeden Behälterverschluss (12) ausgeübt wird,
**dadurch gekennzeichnet, dass**
die Druckerzeugungseinrichtung vor der Inspektionseinrichtung (24) angeordnet ist.

8. Verfahren gemäß Anspruch 7 zur Leckdetektion von verschlossenen Behältern (10), wobei die Behälterverschlüsse (12) Leichtmetall-Verschlüsse sind, wie zum Beispiel Pullring-Verschlüsse aus Aluminium.

## Claims

1. Device for leak detection of closed containers (10), comprising:
- a transportation apparatus for the transportation of the containers (10),
- an inspection apparatus (24) configured to determine the curvature of the container closure (12) of the closed containers (10), and
- a pressure generating apparatus for pressing each container closure (12) flat prior to inspection, and
- an evaluation apparatus (26) with which the curvature of the closure (12) is compared with a predefined value,
wherein the pressure generating apparatus comprises an actuator with which a pressure is applied locally from the outside to each container closure (12), **characterized in that** the pressure generating apparatus is arranged upstream of the inspection apparatus (24).

2. Device for leak detection according to claim 1, wherein the inspection apparatus (24) for determining the curvature of the container closure (12) is an optical inspection apparatus.

3. Device for leak detection according to claim 2, wherein the optical inspection apparatus for determining the curvature of the container closure (12) is a point distance scanner or a 2D or 3D laser scanner, and wherein the distance between the highest point of the container closure (12) and an edge point of the container closure (12) is determined for determining the curvature of the container closure (12).

4. Device for leak detection according to any of the preceding claims, wherein the pressure generating apparatus comprises a plunger with which the pressure is applied to each container closure (12).

5. Device for leak detection according to one of the preceding claims, wherein at least one further container treatment apparatus is arranged upstream of the inspection apparatus (24), and wherein the pressure generating apparatus is integrated in this further container treatment apparatus.

6. Device for leak detection according to one of the preceding claims, wherein a labeler (18) with a container tulip (40) is provided upstream of the inspection apparatus (24), and wherein the pressure generating apparatus is designed as an insert (48) in the container tulip (40).

7. Method for detecting leaks of closed containers (10), comprising the steps of:
- Applying pressure by means of a pressure generating apparatus to a container closure (12) to press said container closure (12) flat,
- Transporting the container (10) to an inspection apparatus (24),
- Inspecting the container closure (12) to determine the curvature of the container closure (12) of the closed container (10); and
- Comparing the thus determined curvature of the container closure (12) with a predefined value,
wherein the pressure generating apparatus comprises an actuator for locally applying pressure to each container closure (12) from the outside, **characterized in that**
the pressure generating apparatus is arranged upstream of the inspection apparatus (24).

8. Method according to claim 7 for leak detection of closed containers (10), wherein the container closures (12) are light metal closures, such as aluminum pull ring closures.

## Revendications

1. Dispositif de détection de fuites de récipients fermés (10), comprenant :
- un dispositif de transport pour le transport des récipients (10),
- un dispositif d'inspection (24) configuré pour déterminer la courbure de la fermeture de récipient (12) des récipients fermés (10), ainsi qu'
- un dispositif générateur de pression avec lequel chaque fermeture de récipient (12) est aplatie avant l'inspection, et
- un dispositif d'analyse (26) avec lequel la courbure de la fermeture (12) est comparée à une valeur de consigne,
le dispositif générateur de pression comprenant un actionneur qui exerce, localement, de l'extérieur, une pression sur chaque fermeture de récipient (12),
**caractérisé en ce que**
le dispositif générateur de pression est disposé en amont du dispositif d'inspection (24).

2. Dispositif de détection de fuites selon la revendication 1, dans lequel le dispositif d'inspection (24) servant à déterminer la courbure de la fermeture de récipient (12) est un dispositif d'inspection optique.

3. Dispositif de détection de fuites selon la revendication 2, dans lequel le dispositif d'inspection optique servant à déterminer la courbure de la fermeture de récipient (12) est un scanner de distance entre les points ou un scanner laser 2D ou 3D et, pour la détermination de la courbure de la fermeture de récipient (12), la distance entre le point le plus haut de la fermeture de récipient (12) et un point marginal de la fermeture de récipient (12) est déterminée.

4. Dispositif de détection de fuites selon l'une des revendications précédentes, dans lequel le dispositif générateur de pression comprend un poinçon avec lequel la pression est exercée sur chaque fermeture de récipient (12).

5. Dispositif de détection de fuites selon l'une des revendications précédentes, dans lequel au moins un autre dispositif de traitement de récipient est disposé en amont du dispositif d'inspection (24) et le dispositif générateur de pression est intégré dans cet autre dispositif de traitement de récipient.

6. Dispositif de détection de fuites selon l'une des revendications précédentes, dans lequel une étiqueteuse (18) avec une tulipe de récipient (40) est prévue en amont du dispositif d'inspection (24) et le dispositif générateur de pression est exécuté sous forme d'insert (48) dans la tulipe de récipient (40).

7. Procédé de détection de fuites de récipients fermés (10) englobant les étapes consistant à :
- exercer une pression au moyen d'un dispositif générateur de pression sur une fermeture de récipient (12) afin d'aplatir cette fermeture de récipient (12),
- transporter le récipient (10) vers un dispositif d'inspection (24),
- inspecter la fermeture de récipient (12) pour déterminer la courbure de la fermeture de récipient (12) du récipient fermé (10), et
- comparer la courbure ainsi déterminée de la fermeture de récipient (12) à une valeur de consigne,
le dispositif générateur de pression comprenant un actionneur qui exerce, localement, de l'extérieur, une pression sur chaque fermeture de récipient (12),
**caractérisé en ce que**
le dispositif générateur de pression est disposé en amont du dispositif d'inspection (24).

8. Procédé selon la revendication 7 de détection de fuites de récipients fermés (10), dans lequel les fermetures de récipient (12) sont des fermetures en alliage léger comme, par exemple, des fermetures à anneau-tirette en aluminium.
